# DEMANDE DE BREVET EUROPEEN

(11) **EP 2 325 358 A1**
(43) Date de publication de la demande: **25.05.2011**
(21) Numéro de dépôt: 10191134.5
(22) Date de dépôt: 15.11.2010
(51) Int. Cl.: D03D 15/00, D03D 1/00

(54) **Utilisation d'un tissu comprenant un matériau spécifique pour détecter la présence d'une substance chimique**

(30) Priorité: 17.11.2009 FR 0958112
(71) Demandeur: Commissariat à l'Énergie Atomique et aux Énergies Alternatives, 75015 Paris (FR)
(72) Inventeur: Brun, Jean, 38800 Champagnier (FR); Durand, Catherine, 38119 Saint Théoffrey (FR); Soubie, Alain, 38120 Saint Égrève (FR)
(74) Mandataire: Ilgart, Jean-Christophe

(57) **Abrégé**

L'invention a trait à l'utilisation d'un tissu comprenant un matériau choisi parmi les métaux, les alliages métalliques, les polymères, les composés inorganiques et les mélanges de ceux-ci, lequel matériau est apte à détecter la présence d'une substance chimique, pour la détection de ladite substance chimique.

Ces tissus peuvent entrer dans la constitution de vêtements de sécurité.

## Description

### DOMAINE TECHNIQUE

La présente invention a trait à l'utilisation d'un tissu comprenant un matériau spécifique apte à détecter la présence d'une substance chimique, lequel tissu peut entrer dans la constitution de vêtements, par exemple de vêtements de sécurité, pour détecter la présence d'une substance chimique, en particulier d'une substance acide.

Ainsi, l'invention trouve son application pour la détection de substances chimiques dans des contextes où la présence de ces substances peut être nocive pour l'organisme, par exemple, dans des usines chimiques.

L'invention peut, en outre, permettre de détecter le début d'un incident industriel, par exemple, l'émission de substances chimiques suite à une fuite.

Le domaine de l'invention est donc celui de la détection des substances chimiques, dans un environnement industriel, par des textiles constitutifs de vêtements portés par les personnes en contact avec un tel environnement.

### ÉTAT DE LA TECHNIQUE ANTÉRIEURE

Dans l'état de la technique, il existe un certain nombre de méthodes destinées à détecter une substance chimique, notamment lorsque la substance chimique est un acide ou une base.

Ainsi, il est connu depuis longtemps de recourir à la technique du papier pH pour détecter si un milieu liquide contient un acide ou une base. Ce papier pH est imbibé d'un indicateur universel, qui a pour vocation de changer de couleur graduellement en fonction du pH. Cet indicateur universel correspond classiquement à un mélange d'indicateurs colorés, chacun des indicateurs colorés du mélange présentant une voire deux zones de virage pour des gammes de pH bien déterminées. Les indicateurs colorés sont choisis de façon à permettre, grâce au changement de couleur opéré, d'obtenir rapidement le pH d'une solution et sont également aptes à couvrir des pH allant de 0 à 14.

Toutefois, ce mode de détection procède d'une volonté directe de l'utilisateur de détecter la présence d'une substance chimique donnée et ne permet pas la détection d'une telle substance sans l'intervention dudit utilisateur. En d'autres termes, la méthode susmentionnée ne permet pas de détecter spontanément la fuite inopinée d'une substance chimique, dans un environnement où une telle fuite est prohibée.

Pour pallier cette insuffisance, d'autres auteurs ont imaginé utiliser le principe de la détection d'une substance chimique par des indicateurs colorés en imprégnant des tissus de telles substances et en confectionnant à partir de ces tissus des vêtements destinés à être portés par des utilisateurs en contact avec des environnements où il est important de détecter spontanément la présence d'une substance chimique, par exemple, suite à une fuite de cette dernière, qui pourrait être à l'origine d'un incident industriel si le problème n'est pas jugulé.

Ainsi, l'utilisateur se trouvant, dans le cadre de ses activités, en contact inopiné avec la substance indésirable, pourra constater immédiatement un changement de couleur de sa tenue et ainsi prévenir un incident éventuel en réglant immédiatement le problème de la fuite de la substance indésirable.

C'est le cas des vêtements conçus à partir de tissus imprégnés d'une résine contenant un indicateur coloré apte à changer de couleur en présence d'une substance chimique donnée, plus précisément en présence d'une substance acide.

Toutefois, ce type de réalisation présente les inconvénients suivants :
- les tissus utilisés ne permettent pas de détecter précisément la nature de la substance acide, qui est entrée en contact avec ceux-ci ;
- les tissus utilisés sont difficiles d'entretien, car les indicateurs colorés imprégnant le tissu peuvent être éliminés en partie lors d'un lavage.

Il existe donc un véritable besoin pour des tissus, pouvant entrer dans la constitution de vêtements de sécurité, et aptes à détecter la présence d'une substance chimique, lesquels tissus ne présentent pas les inconvénients de ceux de l'art antérieur.

### EXPOSÉ DE L'INVENTION

Ainsi, l'invention a trait à l'utilisation d'un tissu comprenant un matériau choisi parmi les métaux, les alliages métalliques, les polymères, les composés inorganiques et les mélanges de ceux-ci, pour la détection d'une substance chimique, lequel matériau est apte à détecter la présence de ladite substance chimique par réaction de ladite substance chimique avec ledit matériau, laquelle réaction se matérialise par un changement de couleur dudit matériau.

L'utilisation d'un tissu comprenant un tel matériau pour la détection d'une substance chimique présente les avantages suivants :
- le matériau présent dans le tissu pour la détection d'une substance chimique est résistant au lavage du tissu ;
- le matériau, en étant choisi de façon appropriée, peut permettre la détection d'une substance chimique spécifique et ainsi l'identification de celle-ci.

Avant d'entrer plus en détail dans l'exposé de l'invention, nous précisons les éléments suivants.

Par tissu, on entend, classiquement :
*du tissu tissé, c'est-à-dire une étoffe tissée formée par l'entrecroisement de deux ensembles de fils, généralement un ensemble de fils de chaîne et un ensemble de fils de trame ;
*du tissu non tissé, c'est-à-dire un assemblage de fibres, maintenues ensemble par entrelacement mécanique (par exemple, par aiguilletage), qui donne un voile ou un mat dont les fibres sont disposées au hasard, par fusion des fibres ou par liage des fibres au moyen d'un agent liant ; ou
*du tissu tricoté, c'est-à-dire une étoffe résultant d'un entrelacement de séries de boucles formées par un ou plusieurs fils.

Le tissu peut comprendre, en outre, un ou plusieurs rubans associés aux fils et/ou fibres.

Par fil, on entend, classiquement, au sens de l'invention, les brins continus entrant dans la constitution du tissu destinés à être entrelacés ou assemblés pour donner le tissu, un fil pouvant être constitué d'un filament simple (on parle alors de monofilament) avec ou sans torsion, d'un ensemble de filaments tordus ensemble (on parle alors de filé) ou d'un ensemble de filaments maintenus ensemble sans torsion (on parle alors de fil sans torsion). Les fils et/ou filaments peuvent présenter n'importe quel type de section (par exemple, une section carrée, une section circulaire ou une section rectangulaire).

Par ruban, on entend, classiquement, une pièce dont sa section transversale affecte, au moins approximativement, la forme d'un rectangle allongé, cette section étant sensiblement la même tout au long du ruban.

Le tissu utilisé conformément à l'invention pour la détection d'une substance chimique peut résulter d'une association d'un ensemble de fils, lesquels fils comprennent au moins un matériau tel que défini ci-dessus, les fils pouvant être entièrement constitués de filament(s) comprenant ledit matériau ou de filaments comprenant ledit matériau torsadés avec des filaments ne comprenant pas ledit matériau, le tissu pouvant comprendre en outre un ou plusieurs rubans comprenant au moins un matériau tel que défini ci-dessus. Ledit tissu peut comprendre, en outre, d'autres fils et/ou d'autres rubans, à savoir des fils et/ou des rubans ne comprenant pas ledit matériau, par exemple, des fils ou rubans en fibre naturelle (comme le coton, la laine), des fils ou rubans en fibre synthétique (comme des fils en polyamide).

Ainsi, dans un tissu utilisé conformément à l'invention, certains fils ou rubans peuvent ne pas comporter de matériau apte à détecter la présence de la substance chimique souhaitée et peuvent ainsi n'avoir qu'une fonction mécanique ou décorative.

Les fils et/ou rubans tels que définis ci-dessus (à savoir, les fils et/ou rubans comprenant ledit matériau apte à détecter la substance chimique voulue) et éventuellement les autres fils et/ou rubans tels que définis ci-dessus peuvent être associés de sorte, qu'en présence de la substance chimique à détecter, un motif apparaisse indiquant la présence de ladite substance, ce motif pouvant par exemple, se présenter sous forme d'un message indiquant la nature de la substance détectée.

Ainsi, en présence d'une telle substance, les fils et/ou rubans comprenant un matériau apte à détecter la substance chimique voulue vont réagir avec ladite substance, laquelle réaction se matérialise par un changement de couleur desdits fils et/ou rubans, ce qui permet l'apparition visuelle dudit motif à l'oeil nu par contraste avec les autres fils et/ou rubans, dont la couleur reste inchangée en présence de ladite substance.

Un mode de tissage permettant la formation de motifs dans un tissu est le mode de tissage Jacquard, bien connu de l'homme du métier.

Le matériau apte à détecter la présence d'une substance chimique compris dans le tissu peut être avantageusement un métal ou alliage métallique, ce matériau étant particulièrement avantageux, en ce sens qu'il est susceptible de changer de couleur en présence d'une substance chimique donnée. Qui plus est, le tissu comprenant un tel matériau peut présenter, en outre, des propriétés antistatiques.

Par métal, on entend, classiquement, un élément métallique sous son degré d'oxydation 0, tels que des métaux alcalins, des métaux alcalino-terreux (par exemple, Mg), des métaux de transition (par exemple, Ni, Ti, Cu, Co et Fe), des métaux pauvres (par exemple, Al, Ga, In, Sn, Tl, Pb et Bi), des éléments métalloïdes (par exemple, Si, Ge). En particulier, il peut s'agir du nickel et du titane à l'état d'oxydation 0. Par alliage métallique, on entend une association de deux ou plus des métaux susmentionnés.

La détection de l'élément chimique par ledit métal ou alliage métallique peut se faire par réaction dudit élément chimique avec ledit métal ou alliage métallique engendrant un changement de couleur de ce dernier, par exemple par réaction d'oxydoréduction. Ainsi, par exemple, lorsque le tissu comprend du fer métallique, ce dernier en présence d'une substance chimique apte à oxyder le fer en ions ferriques (en l'occurrence, la substance que l'on veut détecter) va changer de couleur (passage d'une couleur grise à une couleur rouille) attestant ainsi de la présence de ladite substance.

Le métal ou alliage métallique présent dans le tissu susmentionné et apte à assurer la détection d'une substance chimique donnée peut se présenter sous l'une ou plusieurs des formes suivantes:
- des fils métalliques comprenant un ou plusieurs filaments métalliques constitués dudit métal ou alliage métallique susmentionné et éventuellement un ou plusieurs filaments métalliques constitués d'un autre métal ou alliage métallique;
- des fils métalliques ou non métalliques revêtus d'une couche dudit métal ou alliage métallique susmentionné, ces fils pouvant être obtenus par évaporation ou pulvérisation cathodique dudit métal ou alliage métallique sur les fils non métalliques ou métalliques susmentionnés ;
- des fils, comprenant à la fois un ou plusieurs filaments métalliques constitués dudit métal ou alliage métallique et un ou plusieurs filaments non métalliques (par exemple, un ou plusieurs filaments métalliques constitués dudit métal torsadés avec un ou plusieurs filaments non métalliques).

Le métal ou alliage métallique peut être également présent sous forme d'un ruban constitué dudit métal ou alliage métallique ou d'un ruban (par exemple, un ruban en polyamide) revêtu d'une couche dudit métal ou alliage métallique.

Le tissu comprenant du métal peut comprendre, en outre, des fils non métalliques et/ou des fils métalliques constitués d'un métal ou alliage métallique non apte à détecter la présence de la substance chimique souhaitée.

Les substances chimiques susceptibles d'être détectées par des tissus comprenant du métal ou un alliage métallique utilisés conformément à l'invention peuvent être de divers types.

Il peut s'agir de substances basiques, de substances acides ou encore d'éléments métalliques existant éventuellement sous forme d'oxydes ou d'halogénures.

Ainsi, à titre d'exemples d'éléments métalliques, on peut citer le fer pouvant exister, en solution, sous forme d'halogénure de fer, tel que le chlorure de fer FeCl₃. Cette substance peut être détectée en étant mise en contact avec un tissu comprenant de l'aluminium et/ou du cuivre.

On peut citer également le cobalt pouvant exister sous forme d'oxyde en solution aqueuse acide, tel qu'une solution d'acide sulfurique. Dans un tel milieu, le cobalt peut être détecté lorsqu'il entre en contact avec un tissu comprenant du fer, du cobalt, du cuivre ou du nickel.

Il peut s'agir de substances acides, telles que l'acide fluorhydrique. En effet, il peut être tout à fait intéressant de détecter la présence d'acide fluorhydrique dans des domaines où cet acide est particulièrement utilisé, comme cela est le cas de la microélectronique.

L'acide fluorhydrique peut être détecté en étant mis en contact avec un tissu comprenant du titane.

Ainsi, selon un premier mode de réalisation, ce tissu peut consister en un enchevêtrement d'une première catégorie de fils consistant chacun en un ruban revêtu d'une couche de titane torsadé avec un ou plusieurs filaments en polyamide et d'une deuxième catégorie de fils consistant chacun en un ruban revêtu d'une couche de nickel torsadé avec un ou plusieurs filaments en polyamide.

Selon un second mode de réalisation, ce tissu peut consister en un enchevêtrement de fils en cuivre revêtus d'une couche de titane et de fils en acier inoxydable.

A titre d'exemples, nous mentionnons dans le tableau ci-dessous des substances chimiques susceptibles d'être détectées par contact avec des tissus comprenant des éléments listés dans la colonne de droite.

| | |
|---|---|
| Substance chimique | Métal |
| Solution HCl+ HNO₃ | Nickel |
| Solution HF | Ti |
| Solution H₂O₂+NH₃ | Cu, Ti |
| Solution H₃PO₄ | Al, Mg |
| Solution H₂SO₄ | Cr, Fe, Ti |
| Solution NaOH | Si |
| Solution KOH | Si |
| Solution HNO₃+HF | Ge |

Le matériau apte à détecter la présence d'une substance chimique compris dans le tissu peut être également un composé inorganique, tel qu'une céramique oxyde, comme Fe₂O₃, Al₂O₃, SiO₂.

Les substances chimiques susceptibles d'être détectées par des tissus comprenant un composé inorganique peuvent être des substances acides.

Ainsi, à titre d'exemples :
- un tissu comprenant du Fe₂O₃ peut permettre la détection de l'acide oxalique ;
- un tissu comprenant du Al₂O₃ peut permettre la détection de l'acide phosphorique, éventuellement dans une solution alcoolique comprenant, par exemple, de l'alcool isopropylique ;
- un tissu comprenant du SiO₂ peut permettre la détection de l'acide fluorhydrique.

Le matériau apte à détecter la présence d'une substance chimique compris dans le tissu peut être également un polymère, tel qu'un polyamide ou un polyester tel que le polyéthylène téréphtalate (connu sous l'abréviation PET).

A titre d'exemple, un tissu comprenant du PET peut permettre de détecter la présence d'acide nitrique.

Les tissus susmentionnés peuvent entrer dans la constitution de vêtements, par exemple de vêtements de sécurité, dont les destinataires sont amenés à travailler dans des environnements, où il est nécessaire de détecter la présence d'une substance chimique, cette présence pouvant indiquer une fuite de ladite substance, pouvant ainsi, entraîner, si non jugulée, un incident industriel.

L'invention va, à présent, être décrite, en référence, aux exemples suivants donnés à titre illustratif et non limitatif.

### EXPOSÉ DÉTAILLÉ DE MODES DE RÉALISATION PARTICULIERS

### EXEMPLE

Cet exemple illustre l'utilisation d'un tissu spécifique pour la détection d'acide fluorhydrique.

Ce tissu est obtenu par tissage de deux catégories de fils :
- une première catégorie de fils, dont chacun des fils consiste en un ruban en PET (PET signifiant polyéthylènetéréphtalate), par exemple de 500 µm de large sur 50 µm d'épaisseur revêtu d'une couche de titane de 1000 Â d'épaisseur torsadé avec des filaments en polyamide ;
- une deuxième catégorie de fils, dont chacun des fils consiste en un ruban de PET de 500 µm de large sur 50 µm d'épaisseur revêtu d'une couche de nickel de 1000 Â d'épaisseur torsadé avec des filaments en polyamide.

Le tissu obtenu à partir du tissage de ces deux catégories de fils présente une couleur uniforme.

Lorsque le tissu est mis en présence d'acide fluorhydrique, seuls les fils comprenant un ruban à base de titane changent de couleur, le tissu ne présentant ainsi plus visuellement une uniformité de couleur.

Le même type de résultat peut être obtenu avec un tissu obtenu par tissage de fils en cuivre revêtus d'une couche de titane et de fils en acier inoxydable, seuls les fils en cuivre revêtus d'une couche de titane réagissant et indiquant la présence d'acide fluorhydrique.

Ce tissu peut être ainsi utilisé pour confectionner des vêtements de sécurité destinés à être portés par des utilisateurs travaillant dans des environnements où des fuites ou des éclaboussures d'acide fluorhydriques sont possibles, ce qui est le cas de laboratoire de microélectronique.

## Revendications

1. Utilisation d'un tissu comprenant un matériau choisi parmi les métaux, les alliages métalliques, les polymères, les composés inorganiques et les mélanges de ceux-ci, pour la détection d'une substance chimique, lequel matériau est apte à détecter la présence de ladite substance chimique par réaction de ladite substance chimique avec ledit matériau, laquelle réaction se matérialise par un changement de couleur dudit matériau.

2. Utilisation selon la revendication 1, dans laquelle le tissu résulte d'une association d'un ensemble de fils comprenant au moins un matériau tel que défini à la revendication 1, les fils pouvant être entièrement constitués de filament(s) comprenant ledit matériau ou pouvant être constitués de filaments comprenant ledit matériau torsadés avec des filaments ne comprenant pas ledit matériau, le tissu pouvant comprendre en outre un ou plusieurs rubans comprenant au moins un matériau tel que défini à la revendication 1.

3. Utilisation selon la revendication 2, dans laquelle le tissu comprend, en outre, des fils et/ou des rubans ne comprenant pas un matériau tel que défini à la revendication 1.

4. Utilisation selon la revendication 2 ou 3, dans laquelle les fils et éventuellement les rubans tels que définis à la revendication 2 et éventuellement les fils et/ou rubans tels que définis à la revendication 3 sont associés de sorte, qu'en présence de la substance chimique à détecter, un motif apparaisse indiquant la présence de ladite substance.

5. Utilisation selon l'une quelconque des revendications 1 à 4, dans laquelle le matériau est un métal ou un alliage métallique.

6. Utilisation selon la revendication 5, dans laquelle le métal ou alliage métallique est présent dans le tissu sous l'une ou plusieurs des formes suivantes :
- des fils métalliques comprenant un ou plusieurs filaments métalliques constitués dudit métal ou alliage métallique et éventuellement un ou plusieurs filaments métalliques constitués d'un autre métal ou alliage métallique ;
- des fils métalliques ou non métalliques revêtus d'une couche dudit métal ou alliage métallique ;
- des fils comprenant un ou plusieurs filaments métalliques constitués dudit métal ou alliage métallique et un ou plusieurs filaments non métalliques ;
- un ruban constitué dudit métal ou alliage métallique ou un ruban revêtu d'une couche dudit métal ou alliage métallique.

7. Utilisation selon la revendication 5 ou 6, dans laquelle le tissu comprend, en outre, des fils non métalliques et/ou des fils métalliques constitués d'un métal ou alliage métallique non apte à détecter la présence de ladite substance chimique.

8. Utilisation selon l'une quelconque des revendications précédentes, dans laquelle la substance chimique à détecter est une substance acide.

9. Utilisation selon la revendication 8, dans laquelle la substance acide est de l'acide fluorhydrique.

10. Utilisation selon la revendication 9, dans laquelle le tissu apte à détecter l'acide fluorhydrique est un tissu comprenant du titane.

11. Utilisation selon la revendication 10, dans laquelle le tissu consiste en un enchevêtrement d'une première catégorie de fils consistant chacun en un ruban revêtu d'une couche de titane torsadé avec un ou plusieurs filaments en polyamide et d'une deuxième catégorie de fils consistant chacun en un ruban revêtu d'une couche de nickel torsadé avec un ou plusieurs filaments en polyamide.

12. Utilisation selon la revendication 10, dans laquelle le tissu consiste en un enchevêtrement de fils en cuivre revêtus d'une couche de titane et de fils en acier inoxydable.

13. Utilisation selon l'une quelconque des revendications 1 à 4, dans laquelle le composé inorganique est une céramique oxyde.

14. Utilisation selon l'une quelconque des revendications 1 à 4, dans laquelle le polymère est un polyamide ou un polyester.

15. Utilisation selon quelconque des revendications 1 à 14, dans lequel le tissu entre dans la constitution d'un vêtement de sécurité.
